# EUROPEAN PATENT APPLICATION

(11) **EP 4 339 857 A1**
(43) Date of publication of application: **20.03.2024**
(21) Application number: 23185724.4
(22) Date of filing: 17.07.2023
(51) Int. Cl.: G06Q 10/06

(54) **SYSTEM AND METHOD FOR AUTOMATICALLY CALCULATING QUANTITY AND CONSTRUCTION COST OF RAILWAY FACILITIES BASED ON BUILDING INFORMATION MODELING**

(30) Priority: 13.09.2022 KR 20220115052
(71) Applicant: Korea Railroad Research Institute, Uiwang-si, Gyeonggi-do 16105 (KR)
(72) Inventor: YI, Na-Hyun, Incheon (KR); PARK, YoungKon, Yongin-si, Gyeonggi-do (KR); YOON, Hee-Taek, Yongin-si, Gyeonggi-do (KR); BAE, Young Hoon, Suwon-si, Gyeonggi-do (KR); KIM, Byung Kyu, Seoul (KR)
(74) Representative: Becker, Eberhard

(57) **Abstract**

Provided are a system and method for automatically calculating a quantity and construction cost of building information modeling (BIM)-based railway facilities through which a quantity and construction cost of BIM-based railway facilities are easily and readily calculated through automatic mapping between BIM object attribute information based on standard classification system information and object breakdown structure (OBS) attribute information/work breakdown structure (WBS) attribute information in the case of BIM design of railway facilities, a quantity and construction cost are automatically or manually input in connection with OBS code-specific itemized unit costs or a quantity and construction cost are manually input to a WBS code so that a quantity and construction cost of railway facilities can be calculated using BIM on items and processes that are not modeled as BIM objects of railway facilities, and completion and a progress rate are managed on the basis of a BIM statement by comparatively examining the BIM statement with an existing statement to automatically and connectively calculate a quantity and construction cost of BIM-based railway facilities.

## Description

### CROSS-REFERENCE TO RELATED APPLICATION

This application claims priority to and the benefit of Korean Patent Application No. 10-2022-0115052 filed in the Korean Intellectual Property Office on September 13, 2022, the disclosure of which is incorporated herein by reference in its entirety.

### BACKGROUND

### 1. Field of the Invention

The present invention relates to a system and method for automatically calculating a quantity and construction cost of building information modeling (BIM)-based railway facilities, and more particularly, to a system and method for automatically calculating a quantity and construction cost of BIM-based railway facilities, through which a quantity and construction cost of railway facility BIM objects, which are not modeled as BIM objects, are automatically calculated when a BIM design project for railway facilities (or the field of railway) is carried out.

### 2. Discussion of Related Art

The introduction of building information modeling (BIM) is becoming more active in the Korean construction industry. In the field of architecture, the application of BIM is already expanding throughout public and private projects. Particularly, in the case of civil engineering, research has been conducted to apply BIM to roads, railways, ports, etc.

In the field of architecture, with the vitalization of the private sector, related design companies have established an environment in which they can build and utilize their own three-dimensional (3D) library system, but due to its public nature, the field of civil engineering has limitations in that the country should provide modeling guidelines, standards, and library content. In particular, railway facilities (the field of railways) have limitations in that they are difficult to standardize because standardized linear shapes including structures differ depending on sections due to linear characteristics.

Specifically, construction projects such as railroad facilities and the like include successive steps of project planning, design, construction, and maintenance, and various specialized fields, such as architecture, civil engineering, facilities, electricity, communication, etc., are involved in each step. Various types of construction information are generated, corrected, and transmitted in these specialized fields in each process of a project, and the construction information is shared, integrated, and used according to the work relationship between the specialized fields.

In terms of computerization of such construction information, the current domestic and foreign construction markets are rapidly transitioning from two-dimensional (2D) computer aided design (CAD) to 3D CAD and to a BIM environment for integrating information of the entire life cycle of a building. Such BIM involves utilization of 3D modeling with construction information by combining building, information, and 3D modeling.

The BIM technology enables the storage and utilization of various types of building information throughout the entire life cycle of a building, increases the efficiency of construction projects by providing an environment in which geometric shape information and attribute information may be managed in connection with each other, promotes teamwork, reduces project costs, and increases profitability by shortening the construction period.

Specifically, object-based parametric modeling technology developed in the 1980s is referred to as "BIM," and enables sharing of information on entire construction steps by making it possible to manage all information on the basis of an identifiable object rather than a combination of lines generated in a 2D drawing according to the related art.

As a medium for information transmission, such BIM improves the efficiency of construction management by helping people understand much complex information in various fields as a medium through storing and processing of information generated from construction management. Process and cost information is used more frequently than other information and thus has great influence on the efficient and effective execution of construction work. Accordingly, information is analyzed and utilized in various ways, such as four-dimensional (4D) (3D+time) simulation, five-dimensional (5D) (4D+cost) simulation, etc., by linking process information and cost information on the basis of BIM shape information.

Meanwhile, in the case of designing a 2D CAD-based facility according to the related art, extraction of the quantity of objects based on construction standard classification system information and 2D CAD drawings is performed manually through Excel work and the like. As related objects are linked manually through a separate program and the like to calculate a construction cost, the quantity and construction cost for each process are calculated. In other words, in the case of a 2D design according to the related art, information such as a quantity, a construction cost, a process (4D) activity, etc. is manually entered and examined according to information shown in each drawing and a classification system.

Also, in the case of a 3D BIM design, even when a quantity is calculated according to an attribute of a BIM object, the construction cost according to the quantity and a quantity and construction cost of each process are calculated using each program separately. In particular, since overseas programs are mainly used, a construction cost is calculated without reflecting the Korean situation. Accordingly, even when doing 3D BIM design, construction companies use a method of deriving a quantity and construction cost as used in 2D design according to the related art.

Specifically, in a 2D CAD-based design, a quantity is calculated through values in a drawing, and thus an error may be made when the values are directly input to the 2D CAD. Also, in a quantity calculation process through an Excel program, human errors, such as a numerical input error in manual work and the like, may occur. For this reason, errors may frequently occur in the calculation of a quantity and construction cost, a process schedule, etc.

Even in 3D BIM design, it takes a long time to manually process BIM object attribute information and standard classification system information. Also, when a human error is caused by a worker, it is not easy for others to examine the error.

Meanwhile, BIM design of railway facilities is aimed at a comprehensive design. However, since a modeling level varies depending on each level of data expression (level of development (LoD)), it is difficult to calculate a quantity and construction cost when building information is not modeled. Particularly, BIM design for general railway facilities is performed at LoD 350, and BIM design is not applied to formwork or earth retaining work which are not included in the final model, auxiliary construction, such as an air conditioning facility and the like, measurement service costs, etc. In actual design of railway facilities, it is known that about 50% of the total construction cost can be calculated through BIM.

As the BIM design/construction for railway facilities proceeds, the client (public corporation) needs to manage completion and a progress rate based on BIM, but there is currently no system related to this.

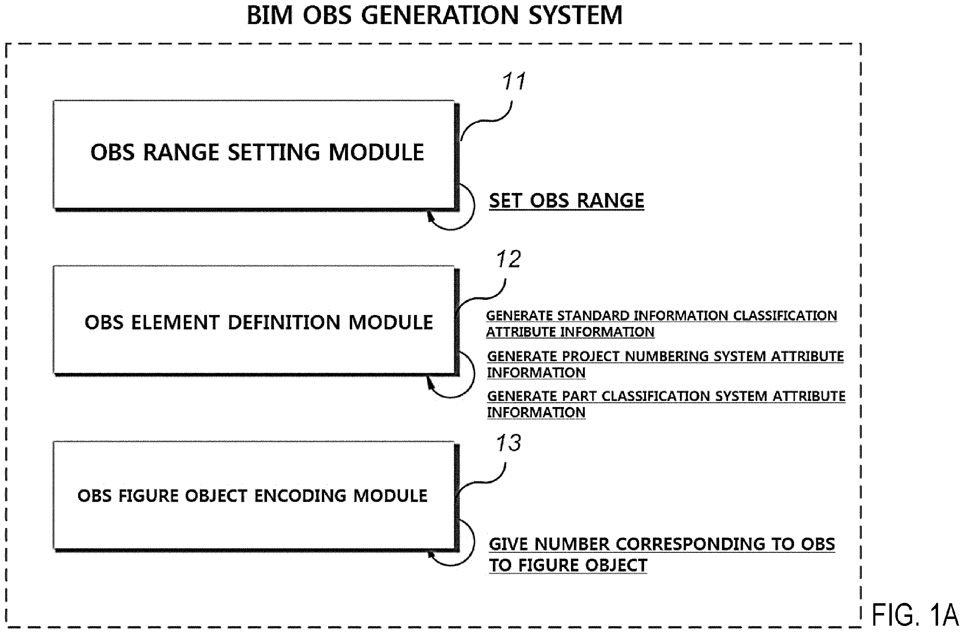

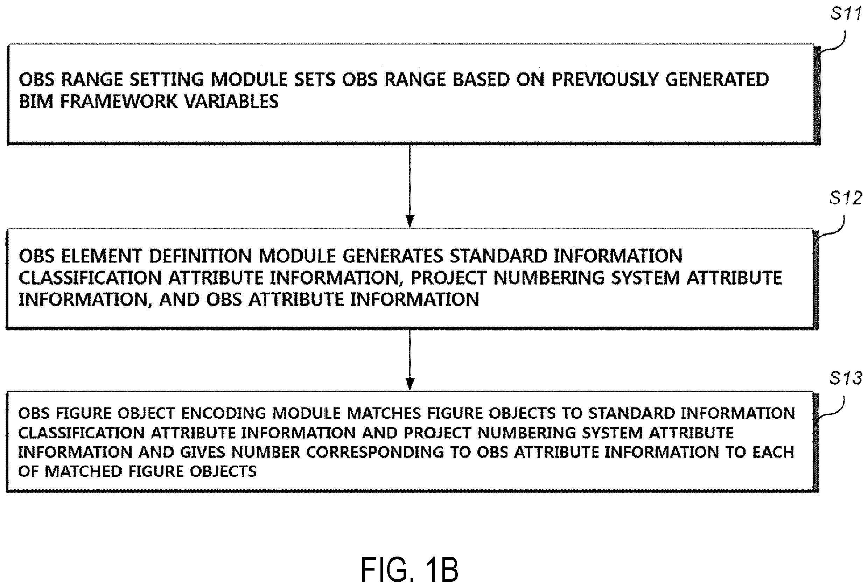

As the related art of BIM, Korean Patent Registration No. 10-1293662 discloses "System for Creating BIM Object Breakdown Structure and Method Therefore," which will be described with reference to FIGS. 1A and 1B.

FIG. 1A is a block diagram of a BIM object breakdown structure (OBS) creation system according to the related art, and FIG. 1B is a flowchart illustrating a BIM OBS creation method according to the related art.

Referring to FIG. 1A, the BIM OBS creation system according to the related art includes an OBS range setting module 11, an OBS element definition module 12, and an OBS figure object encoding module 13.

The OBS range setting module 11 sets a range of an OBS on the basis of previously generated BIM framework variables.

The OBS element definition module 12 generates standard information classification attribute information for managing type-of-construction classification and location classification, generates project numbering system (PNS) attribute information for managing a work breakdown structure (WBS), a cost breakdown structure (CBS), and a standard-method-of-measurement (SMM) breakdown structure (MBS), and generates OBS attribute information for defining figure information (e.g., attribute values in a 3D-CAD or industry foundation classes (IFC) viewer program).

The OBS figure object encoding module 13 matches figure objects to the standard information classification attribute information and the PNS attribute information generated by the OBS element definition module 12 and gives a number corresponding to the OBS attribute information to each of the figure objects.

Referring to FIG. 1B, in the BIM OBS creation method according to the related art, the OBS range setting module 11 sets a range of an OBS on the basis of previously generated BIM framework variables (S11).

Subsequently, the OBS element definition module 12 generates standard information classification attribute information for managing type-of-construction classification and location classification, PNS attribute information for managing a WBS, a CBS, and an MBS, and generates OBS attribute information for defining figure information (S12).

Subsequently, the OBS figure object encoding module 13 matches figure objects to the standard information classification attribute information and the PNS attribute information and gives a number corresponding to the OBS attribute information to each of the figure objects (S13).

Accordingly, the BIM OBS creation system and method according to the related art can generate the framework of a PNS in which a WBS and a CBS may be comprehensively integrated, by deriving PNS linkage requirements which suit BIM object breakdown characteristics.

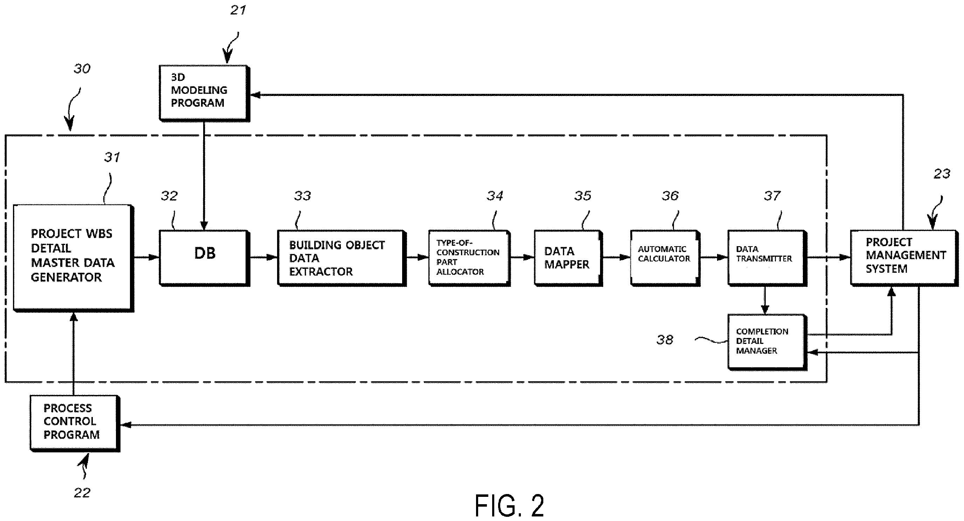

Meanwhile, as other related art, Korean Patent Registration No. 10-1752913 discloses "System and Method for Managing Building Construction Using BIM," which will be described with reference to FIG. 2.

FIG. 2 is a block diagram of a BIM management system according to the related art.

Referring to FIG. 2, a BIM management system 30 according to the related art is run by a computer using 3D modeling data generated by a 3D modeling program 21 and process control data generated by a process control program 22. As the 3D modeling program 21, there are a variety of products, and programs such as Revit, TEKRA, and DP are generally used. As the process control program 22, programs such as Primavera or Microsoft Project are used. Here, the 3D modeling data is converted into an IFC file which is an international standard for open BIM, and transmitted. Also, since the process control data generated by the process control program 22 is a document file, it is converted into an extensible markup language (XML) file and transmitted as process control attribute data.

Specifically, the BIM management system 30 according to the related art includes a project WBS detail master data generator 31, a database (DB) 32, a building object data extractor 33, a type-of-construction part allocator 34, a data mapper 35, an automatic producer 36, a data transmitter 37, and a completion detail manager 38.

The project WBS detail master data generator 31 generates items for each type of construction (e.g., a large construction, a medium construction, and a small construction) of a project WBS and names, details, and process control information of one or more type-of-construction parts for each type-of-construction item in a project work specification structure using the process control attribute data converted from the process control data.

BIM attribute building information data (an IFC file) converted from the 3D modeling data and project WBS detail master data are uploaded and stored in the DB 32.

From the BIM attribute building information data stored in the DB 32, the building object data extractor 33 extracts building object data which includes attribute information of categories, families, and types of building objects constituting a building structure, value information of lengths, a quantity, areas, and volumes of the building objects, and location information of the building objects.

The type-of-object allocator 34 allocates the name and details of a type-of-construction part from a standard object detail master to each building object according to the attribute information of the building objects included in the building object data.

The data mapper 35 maps a project WBS detail master and the building object data to which the type-of-construction parts are allocated.

The automatic producer 36 produces object-specific activity information, object-specific schedule information, and object-specific quantity information data from the building object data mapped by the data mapper 35.

The data transmitter 37 transmits the object-specific activity information, the object-specific schedule information, and the object-specific quantity information data produced by the automatic producer 36 to a project management system 23.

The completion detail manager 38 manages completion details on the basis of the activity information, the schedule information, and the quantity calculation information received from the data transmitter 37 and the actual number of working days received from the project management system 23.

In the BIM management system according to the related art, it is possible to integrate separately generated process control information with a 3D model generated by a 3D modeling program and manage the process control information with the 3D model. Also, integrated management of the overall work of the construction schedule planning, process control, design and construction stages is enabled in connection with a project management system, and cost management and construction schedule management according to a schedule and quantity calculation are possible. Accordingly, it is possible to efficiently construct a building. Further, since a design change, a completion change according to a design change, etc. can be integrated, it is possible to prevent construction-related disputes which may occur during or after construction.

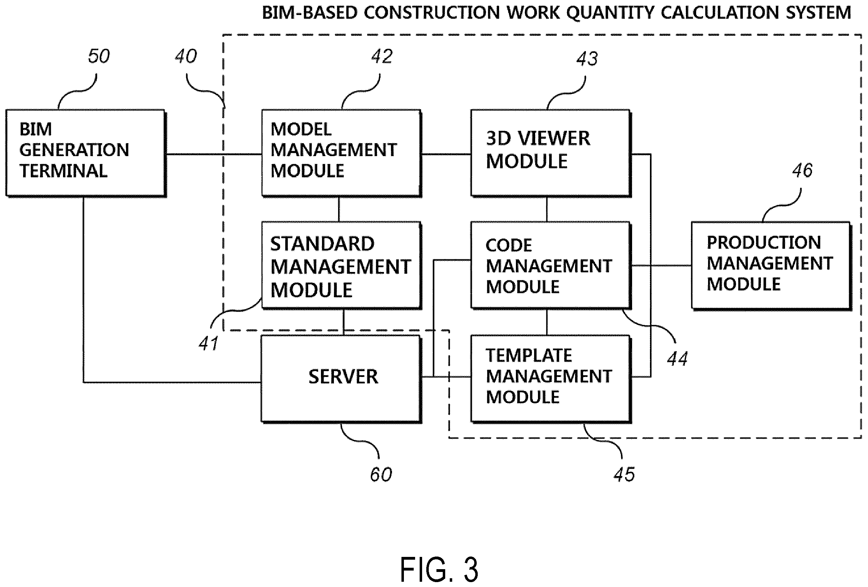

Meanwhile, as related art about BIM quantity calculation, Korean Patent Registration No. 10-1909996 discloses "System and Method for Calculating Construction Work Quantity Based on BIM," which will be described with reference to FIG. 3.

FIG. 3 is a block diagram of a construction work quantity calculation system according to the related art.

Referring to FIG. 3, a system 40 for calculating a quantity of construction work according to the related art includes a standard management module 41 in which a classification system and standard forms for setting code are stored and managed, a model management module 42 which loads, stores, and manages a BIM model generated by a BIM generation terminal 50, a 3D viewer module 43 which loads and display the BIM model stored by the model management module 42, a code management module 44 which manages codes that define components of the loaded BIM model on the basis of a cost breakdown standard and defines and manages codes necessary for calculating details, a template management module 45 which may generate, as a template, a classification system and code information required for quantity calculation defined in the code management module 44 by linking a classification system and code of a corresponding building project stored in a server 60 and the BIM model stored in the model management module 42 and collectively manage all codes included in the project through the generated template, a production management module 46 which may calculate a quantity of construction for each of corresponding types of construction according to a code system defined by the template management module 45, provide a calculation error item, examine a calculation result in connection with a model of a 3D viewer according to each classification system, and finally provide a summary table and visual examination data reflecting the cost structure of a client.

In other words, the system 40 for calculating a quantity of construction work according to the related art may load a BIM model file generated by the BIM generation terminal 50 which generates a BIM model for a building when a BIM program is executed, extract attribute values from the loaded BIM model in connection with a code system in which attribute values required for quantity calculation are defined, provide quantity calculation results by performing quantity calculation for each object on the basis of the extracted attribute values, examine the quantity calculation results from various angles in connection with a BIM model of a 3D viewer according to each classification system, provide a calculation error item, and finally derive and provide a summary table suitable for a form of a client of the building project or a preset standard form.

The system for calculating a quantity of construction work according to the related art can automatically perform a quantity calculation process for construction work of a construction project on the basis of BIM, flexibly examine calculated results through a 3D viewer according to various systems, such as CBS, MBS, OBS, etc., and desired elements, automatically search for a calculation error, check a yield of a desired period or a cumulative period for each process through a 3D viewer with the ability to link to a process program, and generate a summary table reflecting the cost structure of a client.

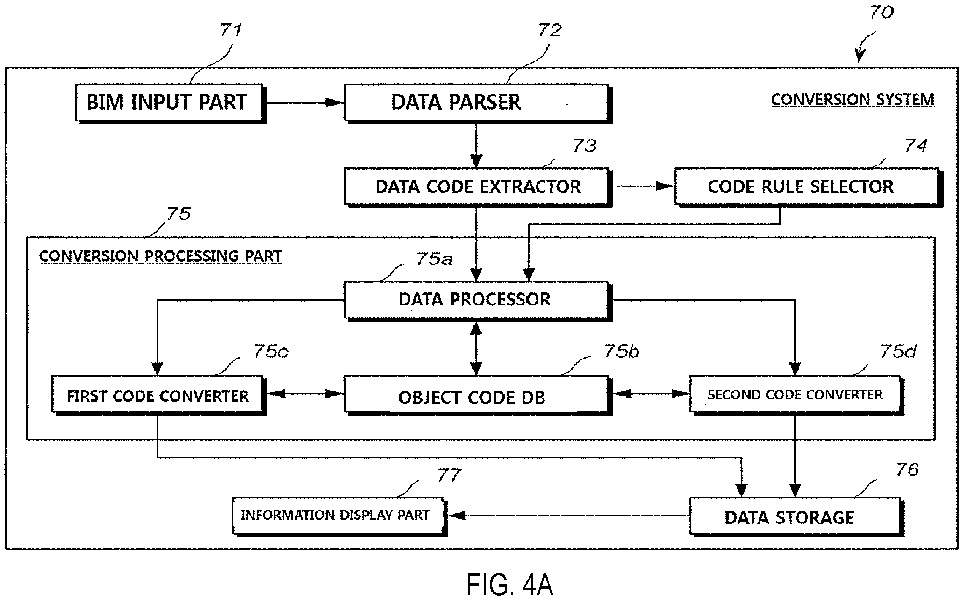

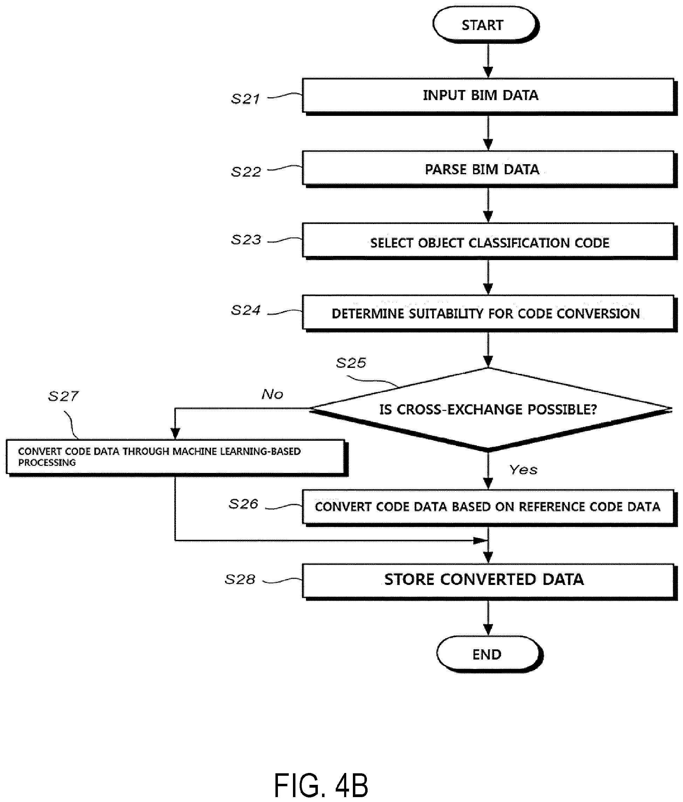

Meanwhile, as related art about the codes of BIM objects, Korean Unexamined Patent Application No. 2022-0078107 discloses "Method and System for Converting Object Code of BIM Data with Different Kind of Structure," which will be described with reference to FIGS. 4A and 4B.

FIG. 4A is a block diagram of a system for converting BIM data with different types of structures into object codes, and FIG. 4B is a flowchart illustrating a process of converting BIM data into an object code.

Referring to FIG. 4A, a system 70 for converting BIM data with different types of structures into object codes according to the related art includes a BIM input part 71, a data parser 72, a data code extractor 73, a code rule selector 74, a conversion processing part 75, a data storage 76, and an information display part 77. Specifically, the conversion processing part 75 includes a data processor 75a, an object code DB 75b, a first code converter 75c, and a second code converter 75d.

BIM data is input to the BIM input part 71, and the data parser 72 parses the BIM data.

The data code extractor 73 extracts target code data which is an object classification code included in the BIM data, and the code rule selector 74 selects rule data for a classification code conversion.

The conversion processing part 75 converts the target code data through conversion processing including processing according to the rule data. Specifically, the object code DB 75b of the conversion processing part 75 stores reference code data of each object on the basis of the rule data, and the data processor 75a performs suitability processing between the target code data and an object classification code to be converted using the reference code data. When the suitability processing result indicates that a cross-exchange is possible, the first code converter 75c converts the target code data on the basis of the reference code data. When the suitability processing result indicates that a cross-exchange is impossible, the second code converter 75d converts and maps the target code data through machine learning-based processing.

The data storage 76 stores converter code data which is the converted target code data, and the information display part 77 embodies one or more objects on the basis of the converter code data and displays attribute information of the objects.

Referring to FIG. 4B, in the process of converting BIM data with different types of structures into object codes according to the related art, BIM data is input from a user terminal, a third service server, etc. to the BIM input part 71 (S21). Here, BIM data converted into the IFC format may be input to the BIM input part 71 to comprehensively improve data suitability, sharing, processing efficiency, etc.

Subsequently, when the BIM data is input, the data parser 72 analyzes data, information, etc. contained in the input BIM data by parsing the BIM data (S22).

Subsequently, the data code extractor 73 selects or extracts data (target code data) of an object classification code representing an object from the data and information analyzed through the analysis process (S23). Here, rule data which is data of rules or manuals for regulating conversion of the target code data from the original data to relative data is selected by or input to the code rule selector 74. In this case, one or more pieces of rule data stored in an internal DB may be proposed through a certain interface environment and selected by a user or the like.

Subsequently, the conversion processing part 75 converts the target code data through a conversion process including processing based on the rule data (S24). Specifically, the object code DB 75b of the conversion processing part 75 stores reference code data of each object based on the rule data, and the data processor 75a performs suitability processing between the target code data and an object classification code to be converted using the reference code data.

Subsequently, when the suitability processing result indicates that a regular cross-exchange is possible on a one-to-one basis (S25), the first code converter 75c reads the reference code data stored in the object code DB 75b and converts the target code data on the basis of the reference code data (S26).

Subsequently, when the suitability processing result indicates that a cross-exchange is impossible, the second code converter 75d converts the target code data through machine learning-based processing (S27).

Subsequently, when the target code data is converted by performing the follow-up binary processing according to the suitability processing result, the converted target code data (converter code data) is stored in the data storage 76 (S28). Here, the data storage 76 is configured to generate a conversion data model by linking or mapping the converter code data and shape data information of the BIM data to each other and store the conversion data model. Also, when a user request signal or the like is input, the information display part 77 embodies one or more objects on the basis of the converter code data and displays attribute information of the object.

With the system for converting BIM data with different types of structures into object codes according to the related art, it is possible to adaptively convert or exchange an object code with a specific classification system for the object code with another classification system accurately and rapidly using an automatic intelligent algorithm and the like.

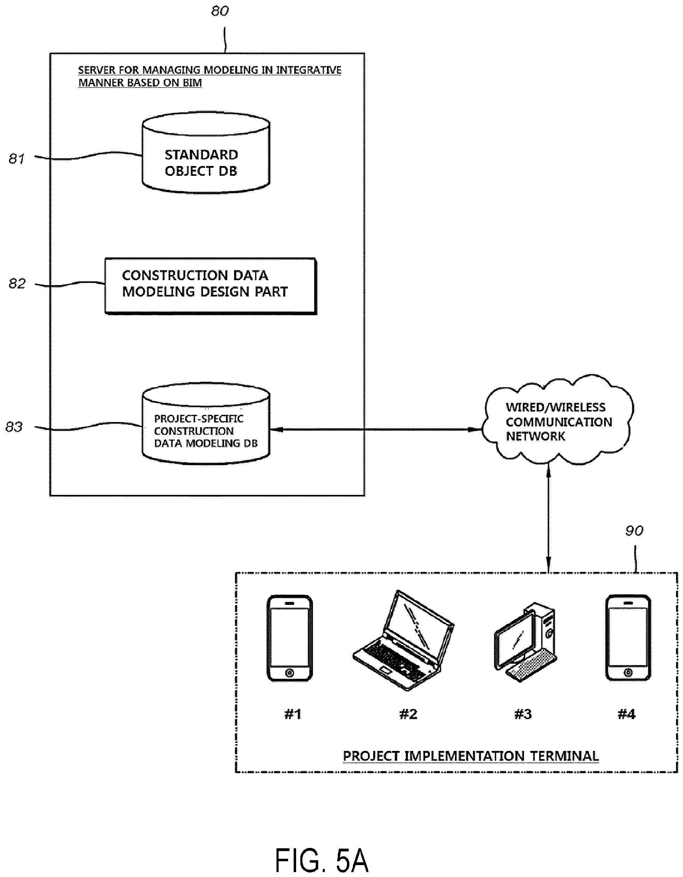

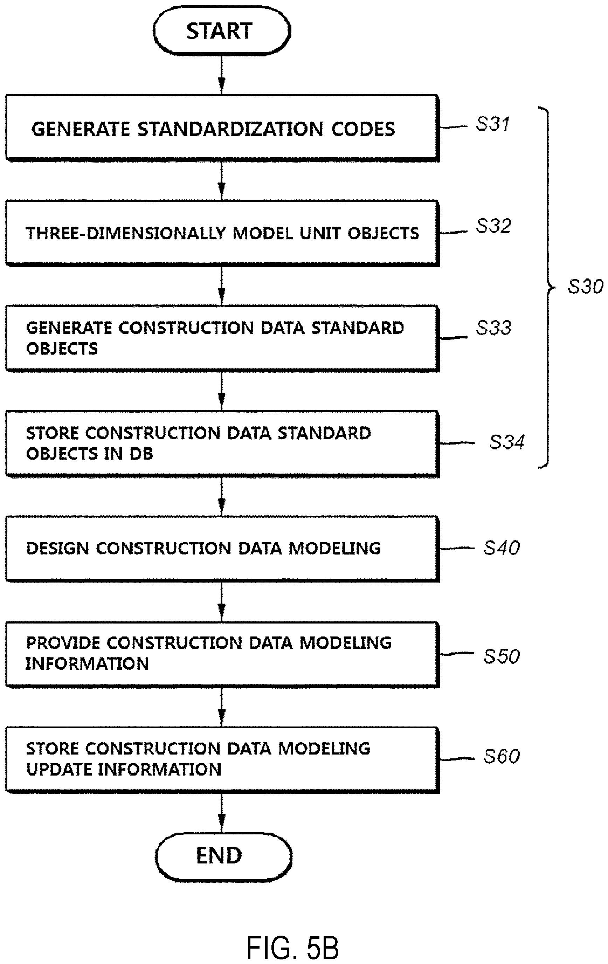

Meanwhile, as other related art, Korean Patent Registration No. 10-2308200 discloses "Method for Managing Construction Data in Integrative Manner Based on Building Information Modeling," which will be described with reference to FIGS. 5A and 5B.

FIG. 5A is a block diagram of a system for managing BIM-based construction data in an integrative manner according to the related art, and FIG. 5B is a flowchart illustrating a method of managing BIM-based construction data in an integrative manner.

Referring to FIG. 5A, the system for managing BIM-based construction data in an integrative manner according to the related art includes a server 80 for managing modeling in an integrative manner on the basis of BIM and a project implementation terminal 90. The server 80 for managing modeling in an integrative manner on the basis of BIM includes a standard object DB 81, a construction data modeling design part 82, and a project-specific construction data modeling DB 83.

The standard object DB 81 stores standard object models obtained by mapping construction period information, cost information, and resource information of unit objects to 3D modeling object drawings.

The construction data modeling design part 82 stores, in the project-specific construction data modeling DB 83, modeling information obtained by extracting a standard object related to a structure design according to implementation of each project from the standard object DB 81 and composing a structure using an object composition method based on an input of linear information.

The project-specific construction data modeling DB 83 stores the construction data modeling information generated by the construction data modeling design part 82.

The project implementation terminal 90 may be in one of various forms, such as a computer, a laptop computer, a smartphone, etc., as a terminal which performs BIM for implementing a construction project. The project implementation terminal 90 receives necessary modeling information from the project-specific construction data modeling DB 83 generated by the server 80 for managing modeling in an integrative manner on the basis of BIM and uses the modeling information.

Referring to FIG. 5B, the method of managing BIM-based construction data in an integrative manner according to the related art first includes a process S30 in which the server 80 for managing modeling in an integrative manner on the basis of BIM stores and registers standard object models obtained by mapping construction period information, cost information, and resource information of unit objects to 3D modeling object drawings.

Specifically, the construction-data-standard-object DB registration process S30 includes an operation S31 of generating standardization codes by unifying drawing codes, quantity calculation codes, construction cost codes, work breakdown codes, and facility classification system codes of unit objects for each client, an operation S32 of three-dimensionally modeling client-specific unit objects on the basis of the standardization codes, an operation S33 of generating construction data standard objects by mapping construction period information, cost information, and resource information to each of the three-dimensionally modeled unit objects, and then an operation S34 of encoding the construction data standard objects standardized for each client in a parametric manner with reference to work breakdown code and facility classification code and storing the encoded construction data standard objects in the construction data standard object DB 81.

Subsequently, the server 80 for managing modeling in an integrative manner on the basis of BIM stores, in the project-specific construction data modeling DB 83, modeling information obtained by extracting a construction data standard object related to a structure design according to implementation of each project from the standard object DB 81 and composing a structure using an object composition method based on an input of linear information (S40).

Subsequently, the server 80 for managing modeling in an integrative manner on the basis of BIM extracts construction data modeling information matching project information received from the project implementation terminal 90 from the project-specific construction data modeling DB 83 and provides the construction data modeling information to the project implementation terminal 90 (S50).

Subsequently, the server 80 for managing modeling in an integrative manner on the basis of BIM receives construction data modeling update information which is corrected in connection with geographical information system (GIS) data from the project implementation terminal 90 and stores the construction data modeling update information (S60).

The system for managing construction data in an integrative manner on the basis of BIM according to the related art parametrically classifies a BIM-based civil engineering or construction project into standard object models for each client, 3D models each object, maps construction period (schedule) information, cost information and resource information to standard objects for automatic interoperation, and stores the construction period information, the cost information, and the resource information with the standard objects. Also, the system for managing construction data in an integrative manner on the basis of BIM can call standard objects stored during a project in a parametric manner and automatically calculate construction period information, cost information, and resource information which are construction data of a 3D standard object model as an object combination based on an input of linear information. Further, when a modification is made during design and construction management, construction period information, cost information, and resource information are modified together according to a modification in a standard object model, and it is possible to provide efficient digital construction data. In addition, even during or after a project process, it is possible to perform digital social overhead capital (SOC) maintenance using standard object model information, that is, construction period information, cost information, and resource information reflected in the standard object model information.

Meanwhile, a railway management system performs each stage of the entire life cycle of a railroad including a design stage, a construction stage, a commissioning stage, and a maintenance stage, and information generated in each stage is stored in each server and used.

However, servers of the railway management system according to the related art are not managed in an integrative manner at each stage, and only work-oriented document/drawing management for each stage is carried out without information linkage between stages. Therefore, information generated during a project, such as a design stage, a construction stage, a commissioning stage, etc., is not utilized in the maintenance stage, and thus it is impossible to manage the consistency and quality of related information when a problem occurs.

As related art about railway management for solving the foregoing problem, Korean Patent Registration No. 10-1816770 discloses "System for Managing Railway Facility Based on BIM." The system for managing a railway facility on the basis of BIM according to the related art can detect a current error in a railway facility at a design stage by comparatively reading errors of a railway facility which has already been installed, using BIM and repair the railway facility according to BIM information. Accordingly, maintenance can be carried out so that the railway facility corresponds to the railway facility at the design stage. As a result, accurate and precise maintenance is possible, and a unique function of the railway facility can be maintained without errors.

Meanwhile, as other related art about railway management, Korean Unexamined Patent Application No. 2022-0094389 discloses "Method and Apparatus for Managing Design Information for Railway Infrastructure Based on BIM." The patent application discloses a method and apparatus for managing design information of railway infrastructure on the basis of BIM to store and manage a BIM data file including a 3D shape model for a railway infrastructure design project according to a standard system.

With the method of managing design information of railway infrastructure on the basis of BIM according to the related art, generated 3D shape models are classified on the basis of classification codes and stored, and the previously generated 3D shaped models are reused when a construction project with the same classification code is implemented. Accordingly, it is possible to reduce design costs. Also, it is possible to accurately evaluate the degree of completion of a product by verifying the quality of a BIM data file including the 3D shape model on the basis of a standard quality reference.

Meanwhile, in the 2D design of a facility, mapping between attribute information, a classification system, and design information takes a long time due to manual work as described above. Particularly, in many cases, there is information inconsistency between attributes due to a human error caused by a worker.

Also, even in 3D BIM design, a quantity and construction cost are practically calculated in an existing 2D manner, and thus a large error may occur. As a result, there is a problem in that the accuracy of the calculated quantity and construction cost is not high.

As described above, even when complete BIM design is performed for railway facilities, only 50% of costs actually paid for the construction is modeled at a current level of BIM. There is no system that enables a user to manually input data of BIM objects and work which are not modeled through BIM or automatically calculates and inputs data of the BIM objects and work in connection with corresponding formulae.

As BIM design/construction of railway facilities is carried out, the client manages and supervises completion and a progress rate based on BIM. However, this is difficult because there is no system related thereto. For example, when a BIM design company and a construction company submit a combination of a 2D-based statement and a 3D BIM-based statement, it is necessary to compare and examine the statements. However, current domestic and foreign BIM quantity and construction cost calculation programs do not enable comparative examination between a 2D-based statement and a 3D BIM-based statement for management.

### RELATED ART DOCUMENTS

### Patent Documents

(Patent document 1) Korean Patent Registration No. 10-1293662 (filed on Jul 31, 2013), title: "System for Creating BIM Object Breakdown Structure and Method Therefore"
(Patent document 2) Korean Patent Registration No. 10-1752913 (filed on Jun 26, 2017), title: "System and Method for Managing Building Construction Using BIM"
(Patent document 3) Korean Patent Registration No. 10-1909996 (filed on Oct 15, 2018), title: "System and Method for Calculating Construction Work Quantity Based on BIM"
(Patent document 4) Korean Patent Registration No. 10-2308200 (filed on Sep 27, 2021), title: "Method for Managing Construction Data in Integrative Manner Based on Building Information Modeling"
(Patent document 5) Korean Patent Registration No. 10-1816770 (filed on Jan 3, 2018), title: "System for Managing Railway Facility Based on BIM"
(Patent document 6) Korean Unexamined Patent Application No. 2022-0094389 (filed on Jul 6, 2022), title: "Method and Apparatus for Managing Design Information for Railway Infrastructure Based on BIM"
(Patent document 7) Korean Unexamined Patent Application No. 10-0078107 (filed on Jun 10, 2022), title: "Method and System for Converting Object Code of BIM Data with Different Kind of Structure"

### SUMMARY OF THE INVENTION

The present invention is directed to providing a system and method for automatically calculating a quantity and construction cost of building information modeling (BIM)-based railway facilities that enable a quantity and construction cost of BIM-based railway facilities to be easily and readily calculated through automatic mapping between BIM object attribute information based on standard classification system information and object breakdown structure (OBS)/work breakdown structure (WBS) attribute information in the case of BIM design of railway facilities.

The present invention is also directed to providing a system and method for automatically calculating a quantity and construction cost of BIM-based railway facilities that enable a quantity and construction cost to be automatically or manually input in connection with OBS code-specific itemized unit costs or a quantity and construction cost to be manually input to a WBS code so that a quantity and construction cost of railway facilities can be calculated using BIM on items and processes that are not modeled as BIM objects of railway facilities.

The present invention is also directed to providing a system and method for automatically calculating a quantity and construction cost of BIM-based railway facilities in which completion and a progress rate are managed on the basis of a BIM statement by comparatively examining the BIM statement with an existing statement, thus enabling a quantity and construction cost of BIM-based railway facilities to be automatically and connectively calculated.

According to an aspect of the present invention, there is provided a system for automatically calculating a quantity and construction cost of BIM-based railway facilities, the system including a railway facility BIM design module configured to build a BIM library by collecting railway facility data and generate a BIM design file including BIM object items by performing BIM design of railway facilities on the basis of the BIM library, a standard classification database (DB) configured to store an object breakdown table of an OBS, a work breakdown table of a work breakdown structure (WBS), a cost breakdown table of a cost breakdown structure (CBS), and an itemized unit cost calculation formula, a railway facility quantity and construction cost calculation module configured to generate object breakdown tree information and work breakdown tree information by mapping attribute information of the BIM objects to OBS attribute information/WBS attribute information and perform a calculation process for calculating a quantity and construction cost of BIM-based railway facilities through a quantity calculation tab and a construction cost calculation tab, respectively, and a BIM quantity and construction cost statement generation module configured to generate a BIM statement based on a combination of the CBS and the WBS and calculate an entire BIM quantity and an entire construction cost.

When it is necessary to input OBS codes/WBS codes to the attribute information of the BIM objects, the railway facility quantity and construction cost calculation module may additionally and automatically map individual items of the BIM objects to the OBS attribute information and the WBS attribute information through a drag and drop function with reference to the object breakdown table and the work breakdown table.

The BIM objects may include the attribute information, and the attribute information of the BIM objects may include at least one of general object information, object identification information, industry foundation classes (IFC) information, object size information, object structure information, and object material information and further include an OBS code input field and a WBS code input field.

The standard classification system DB may include an OBS DB configured to store a hierarchical structure of space, facility, and part units for efficiently managing BIM objects of railway facilities from an object viewpoint, a WBS DB configured to store a hierarchical structure obtained by subdividing work performed by a specific construction project team to achieve a goal and produce a necessary result, a CBS DB configured to store a hierarchical structure of a WBS including all work and services performed by a project operator from a cost perspective, and an itemized unit cost DB configured to store itemized unit costs for OBS codes input to unit BIM objects of the OBS and store automatic/connective/manual calculation formulae for BIM objects to examine an item not modeled through BIM.

The railway facility BIM design module may include a BIM library generator configured to collect railway facility data using a BIM tool and generate a BIM library model for railway facilities, a classification system code input part including an OBS code input part configured to input an OBS code to an OBS code input field of BIM objects of railway facilities and a WBS code input part configured to input a WBS code to a WBS code input field of BIM objects of railway facilities, and a BIM design modeling performer configured to generate the BIM design file including the BIM object items by performing BIM for BIM design of the railway facilities on the basis of the BIM library.

The railway facility quantity and construction cost calculation module may include a classification system code checker configured to determine whether it is necessary to additionally input an OBS code and a WBS code which are classification system codes to BIM object attribute information of each of the BIM object items, an automatic mapping and calculation processor configured to map the OBS attribute information and the WBS attribute information to the BIM object attribute information and perform the calculation process, a drag and drop executer configured to additionally map OBS attribute information and WBS attribute information of each BIM object item with reference to the object breakdown table and the work breakdown table when it is necessary to input the OBS code and the WBS code, an object breakdown tree information generator configured to call the attribute information of the BIM objects, perform a calculation process on OBS codes and the OBS attribute information, and automatically generate object breakdown tree information reflecting the OBS codes, a work breakdown tree information generator configured to call the attribute information of the BIM objects, perform a calculation process on WBS codes and the WBS attribute information, and automatically generate work breakdown tree information reflecting the WBS codes and the WBS attribute information, a CBS/itemized unit cost caller configured to call a CBS stored in the CBS DB and an itemized unit cost stored in the itemized unit cost DB, a quantity calculator configured to calculate a quantity of BIM-based railway facilities from the object breakdown tree information generated by the object breakdown tree information generator, and a construction cost calculator configured to calculate a construction cost of the BIM-based railway facilities by combining construction costs of the BIM object items which are data of the Public Procurement Service and the quantity of the railway facilities on the basis of the work breakdown tree information generated by the work breakdown tree information generator.

The drag and drop executer may additionally map OBS attribute information and WBS attribute information of each BIM object item with reference to the object breakdown table and the work breakdown table using a drag and drop function when it is necessary to input the classification system codes.

The BIM quantity and construction cost statement generation module may compare a quantity/construction cost with an existing statement and manage completion and a progress rate on the basis of a final BIM statement.

According to another aspect of the present invention, there is provided a method of automatically calculating a quantity and construction cost of BIM-based railway facilities, the method including a) designing BIM for railway facilities and inputting OBS codes and WBS codes as standard classification codes to generate BIM object items which are a BIM design file, b) automatically mapping BIM object attribute information to OBS/WBS attribute information provided by a standard classification system DB, c) rearranging automatically mapped BIM object items, d) calling a CBS DB and an itemized unit cost DB, e) calculating a quantity of BIM-based railway facilities, f) calculating a construction cost of the BIM-based railway facilities, and g) generating and comparatively analyzing a quantity and construction cost statement of the BIM-based railway facilities the construction cost statement.

Operation d) may include, when it is necessary to newly generate a statement, calling, by the itemized unit cost DB, a statement reflecting a Public Procurement Service standard itemized unit cost DB in consideration of real-time standard estimating, price information, and unit wages.

Operation e) may include calculating a first type of itemized unit cost of each OBS code, calling an automatic/connective(formula)/manual quantity calculation formula DB, performing a calculation process, and automatically mapping, reflecting, and displaying OBS code-specific automatic/connective/manual statement itemized unit cost information through a quantity calculation tab.

Operation f) may include automatically linking the BIM objects to automatic/connective/manual quantity calculation results through a construction cost calculation tab, additionally inputting a quantity and construction cost manually when something is in a work process but is not expressed as a BIM object, automatically linking the BIM objects to the WBS codes and itemized unit costs of the BIM objects, and calculating and checking a BIM construction cost in work breakdown units of a WBS.

Operation g) may include comparing a quantity/construction cost with an existing statement and managing completion and a progress rate on the basis of a final BIM statement.

### BRIEF DESCRIPTION OF THE DRAWINGS

The above and other objects, features and advantages of the present invention will become more apparent to those of ordinary skill in the art by describing exemplary embodiments thereof in detail with reference to the accompanying drawings, in which:
FIGS. 1A and 1B are a block diagram of a building information modeling (BIM) object breakdown structure (OBS) creation system according to the related art and a flowchart illustrating a BIM OBS creation method according to the related art, respectively;
FIG. 2 is a block diagram of a BIM management system according to the related art;
FIG. 3 is a block diagram of a construction work quantity calculation system according to the related art;
FIGS. 4A and 4B are a block diagram of a system for converting BIM data with different types of structures into object codes and a flowchart illustrating a process of converting BIM data into an object code, respectively;
FIGS. 5A and 5B are a block diagram of a system for managing BIM-based construction data in an integrative manner according to the related art and a flowchart illustrating a method of managing BIM-based construction data in an integrative manner, respectively;
FIG. 6 is a block diagram of a system for automatically calculating a quantity and construction cost of BIM-based railway facilities according to an exemplary embodiment of the present invention;
FIG. 7 is a detailed block diagram of a standard classification system database (DB) in the system for automatically calculating a quantity and construction cost of BIM-based railway facilities according to the exemplary embodiment of the present invention;
FIG. 8 is a detailed block diagram of a railway facility BIM design module in the system for automatically calculating a quantity and construction cost of BIM-based railway facilities according to the exemplary embodiment of the present invention;
FIG. 9 is a detailed block diagram of a railway facility quantity and construction cost calculation module in the system for automatically calculating a quantity and construction cost of BIM-based railway facilities according to the exemplary embodiment of the present invention;
FIG. 10 is a flowchart illustrating a method of automatically calculating a quantity and construction cost of BIM-based railway facilities according to an exemplary embodiment of the present invention;
FIG. 11 is a screenshot illustrating automatic mapping between BIM objects and a standard classification system in the method of automatically calculating a quantity and construction cost of BIM-based railway facilities according to the exemplary embodiment of the present invention;
FIG. 12 is a screenshot illustrating calculation of a quantity of BIM objects based on an OBS in the method of automatically calculating a quantity and construction cost of BIM-based railway facilities according to the exemplary embodiment of the present invention;
FIG. 13 is a screenshot illustrating calculation of a construction cost of BIM objects based on a work breakdown structure (WBS) in the method of automatically calculating a quantity and construction cost of BIM-based railway facilities according to the exemplary embodiment of the present invention; and
FIG. 14 is a screenshot illustrating generation of a statement of BIM quantity and construction cost in the method of automatically calculating a quantity and construction cost of BIM-based railway facilities according to the exemplary embodiment of the present invention.

### DETAILED DESCRIPTION OF EXEMPLARY EMBODIMENTS

Hereinafter, exemplary embodiments of the present invention will be described in detail so that those skilled in the technical field to which the present invention pertains can readily implement the present invention with reference to the accompanying drawings. However, the present invention can be implemented in a variety of different forms and is not limited the embodiments disclosed herein.

Throughout the specification, when a certain part is referred to as "including" a certain component, this means that the part may further include other components rather than excluding other components unless described otherwise. Also, the terms "part" and the like used herein means a unit for processing at least one function or operation, which may be implemented as hardware, software, or a combination of hardware and software.

### [System for automatically calculating a quantity and construction cost of BIM-based railway facilities]

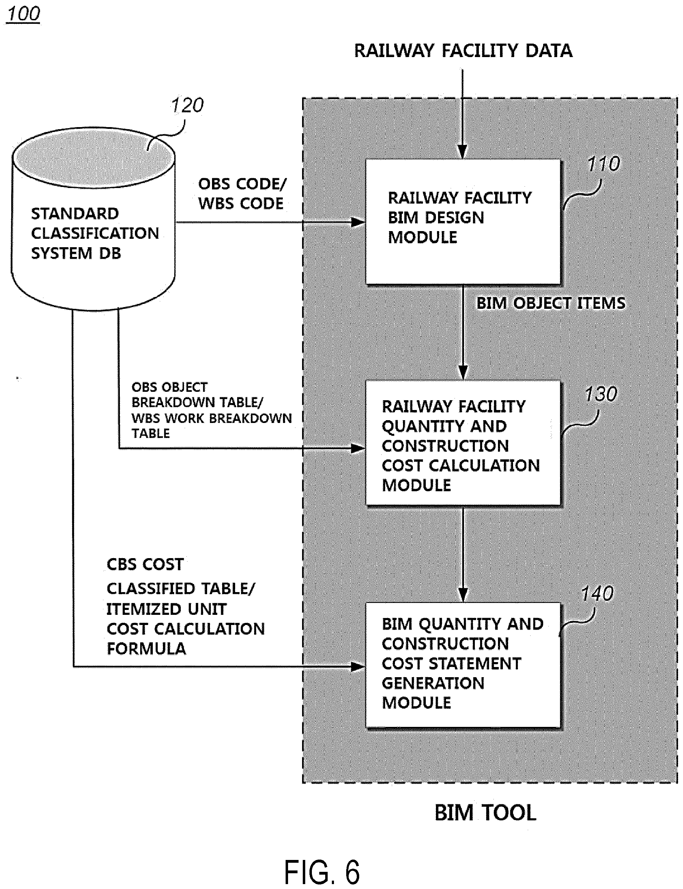

FIG. 6 is a block diagram of a system for automatically calculating a quantity and construction cost of building information modeling (BIM)-based railway facilities according to an exemplary embodiment of the present invention.

Referring to FIG. 6, a system 100 for automatically calculating a quantity and construction cost of BIM-based railway facilities according to the exemplary embodiment of the present invention includes a railway facility BIM design module 110, a standard classification system database (DB) 120, a railway facility quantity and construction cost calculation module 130, and a BIM quantity and construction cost statement generation module 140.

The railway facility BIM design module 110 builds a BIM library by collecting railway facility data (design drawings of the industry foundation classes (IFC) format and the like) using a BIM tool and generates a BIM design file by performing BIM design of railway facilities on the basis of the BIM library. Here, the BIM design file includes BIM object items, and the BIM objects include several pieces of attribute information.

For example, the attribute information of the BIM objects may include at least one of general object information, object identification information, IFC information, object size information, object structure information, and object material information. Also, the BIM objects include an object breakdown structure (OBS) code input field to which OBS codes may be input, and a work breakdown structure (WBS) code input field to which WBS codes may be input.

The standard classification system DB 120 stores an object breakdown table of an OBS which is a standard classification system, a work breakdown table of a WBS, a cost breakdown table of a cost breakdown structure (CBS), and itemized unit costs. Here, each of the object breakdown table and the work breakdown table includes attribute information. In the object breakdown table, BIM objects are classified by stage and set. Also, in the work breakdown table, railway facility work is classified by stage and set.

The standard classification system required for running the system 100 for automatically calculating a quantity and construction cost of BIM-based railway facilities according to the exemplary embodiment of the present invention is created as a DB in advance and stored in the standard classification system DB 120. Particularly, the standard classification system of railway facilities is proposed by a client, and a user may add something as necessary.

The railway facility quantity and construction cost calculation module 130 generates object breakdown tree information and work breakdown tree information by mapping attribute information of the BIM objects to OBS attribute information/WBS attribute information and performs a calculation process for calculating a quantity and construction cost of BIM-based railway facilities through a quantity calculation tab and a construction cost calculation tab, respectively.

The BIM quantity and construction cost statement generation module 140 may generate a BIM statement based on a combination of the CBS and the WBS and calculate an entire BIM quantity and an entire construction cost. Also, the BIM quantity and construction cost statement generation module 140 may compare the BIM quantity/construction cost with that of an existing statement (a two-dimensional (2D) statement or an existing BIM statement) and manage completion and a progress rate on the basis of a final BIM statement.

Accordingly, a quantity and construction cost of BIM-based railway facilities can be automatically calculated through an automatic mapping function between BIM object attribute information of railway facilities and OBS and WBS attribute information according to the standard classification system.

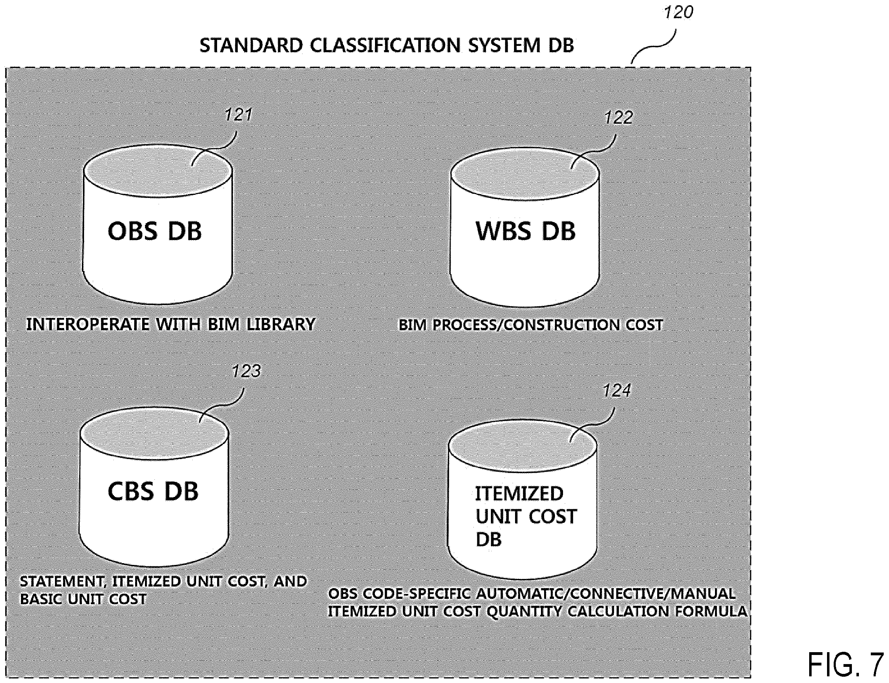

Meanwhile, FIG. 7 is a detailed block diagram of a standard classification system DB in the system for automatically calculating a quantity and construction cost of BIM-based railway facilities according to the exemplary embodiment of the present invention.

Referring to FIG. 7, the standard classification system DB 120 may include, but is not limited to, an OBS DB 121, a WBS DB 122, a CBS DB 123, and an itemized unit cost DB 124.

Specifically, the OBS DB 121 is a DB storing a hierarchical structure of space, facility, and part units for efficiently managing BIM objects of railway facilities from an object viewpoint. In the OBS DB 121, codes are input to unit BIM objects, and the OBS DB 121 is a standard classification system DB provided so that a BIM object can be easily recognized and automated through an OBS code.

The WBS DB 122 is a DB storing work performed by a specific construction project team to achieve a goal and derive a necessary result, according to a subdivided hierarchical structure. The WBS DB 122 is a standard classification DB provided to input a WBS code to unit work.

The CBS DB 123 is a DB storing a hierarchical structure of the WBS including all work and services performed by a project operator from a cost (e.g., budget or prime cost) perspective. The CBS DB 123 is a standard classification DB provided to input a CBS code to an itemized unit cost.

The itemized unit cost DB 124 is a DB storing itemized unit costs for OBS codes input to unit BIM objects of the OBS and storing automatic/connective/manual calculation formulae for BIM objects to examine an item which is not modeled through BIM. Particularly, even when railway facilities are not represented as BIM objects, a BIM quantity and construction cost of the railway facilities may be calculated.

For example, in the case of modeling a quadrangle column from a BIM object, automatic calculation of a concrete volume is possible, and thus a quantity of concrete may be automatically calculated. Also, BIM objects are not modeled from concrete forms, but a quantity of concrete forms is calculable as an external surface area. Accordingly, a quantity of concrete forms may be calculated in a connective manner. Also, when modeling on all steel bars is not possible, a quantity of the steel bars may be calculated by manually inputting a quantity.

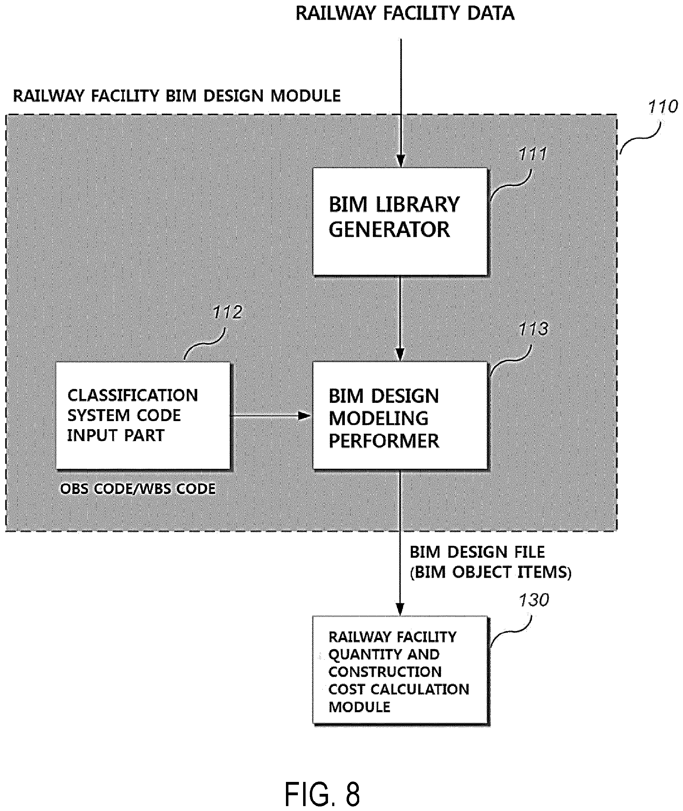

Meanwhile, FIG. 8 is a detailed block diagram of a railway facility BIM design module in the system for automatically calculating a quantity and construction cost of BIM-based railway facilities according to the exemplary embodiment of the present invention.

Referring to FIG. 8, in the system for automatically calculating a quantity and construction cost of BIM-based railway facilities according to the exemplary embodiment of the present invention, the railway facility BIM design module 110 includes a BIM library generator 111, a classification system code input part 112, and a BIM design modeling performer 113.

The BIM library generator 111 collects railway facility data using a general BIM tool and generates a BIM library model for railway facilities.

The classification system code input part 112 includes an OBS code input part and a WBS code input part, and the OBS code input part inputs an OBS code to an OBS code input field of BIM objects. Here, the OBS code corresponds to a relevant object of an OBS object classification table stored in the OBS DB 121 of the standard classification system DB 120. Also, the WBS code input part inputs a WBS code to a WBS code input field of BIM objects. Here, the WBS code corresponds to a relevant object of a work classification table stored in the WBS DB 122 of the standard classification system DB 120.

The BIM design modeling performer 113 generates a BIM design file including BIM object items by performing BIM library-based BIM modeling for BIM design of railway facilities. Here, each of the BIM objects of the BIM object items includes attribute information. Specifically, attributes in BIM represent physical and logical characteristics that a target object has, and are important information items for determining the availability of a library. Also, as attribute information of a BIM object, a one-shape object may have infinite items in theory, and a user may additionally define items other than basic items provided by the BIM tool.

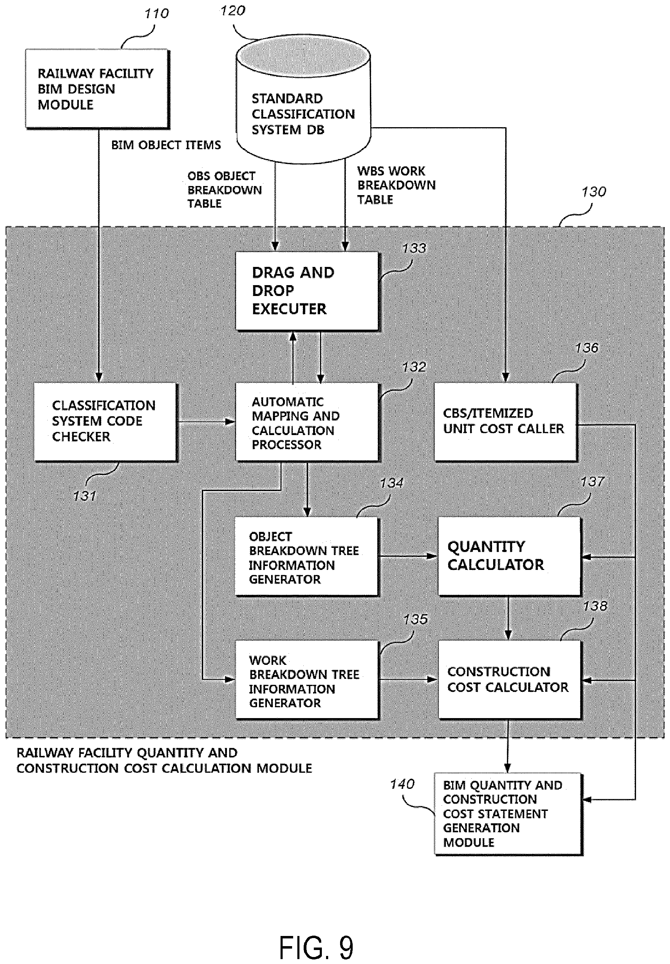

Meanwhile, FIG. 9 is a detailed block diagram of a railway facility quantity and construction cost calculation module in the system for automatically calculating a quantity and construction cost of BIM-based railway facilities according to the exemplary embodiment of the present invention.

Referring to FIG. 9, in the system 100 for automatically calculating a quantity and construction cost of BIM-based railway facilities according to the exemplary embodiment of the present invention, the railway facility quantity and construction cost calculation module 130 includes a classification system code checker 131, an automatic mapping and calculation processor 132, a drag and drop executer 133, an object breakdown tree information generator 134, a work breakdown tree information generator 135, a CBS/itemized unit cost caller 136, a quantity calculator 137, and a construction cost calculator 138.

The classification system code checker 131 determines whether it is necessary to additionally input an OBS code and a WBS code to each BIM object of the BIM object items.

The automatic mapping and calculation processor 132 maps OBS attribute information and WBS attribute information to BIM object attribute information and performs a calculation process.

The drag and drop executer 133 additionally maps OBS attribute information and WBS attribute information of each BIM object item with reference to the object breakdown table and the work breakdown table when it is necessary to input the classification system codes. In other words, when it is necessary to input the OBS code and the WBS code which are the classification system codes, OBS attribute information and WBS attribute information is mapped to each piece of BIM object attribute information, and then the drag and drop executer 133 additionally maps OBS attribute information and WBS attribute information of each BIM object item with reference to the object breakdown table and the work breakdown table using a drag and drop function.

The object breakdown tree information generator 134 generates object breakdown tree information. In other words, when a calculation process is performed on OBS codes by calling attribute information of BIM objects, object breakdown tree information reflecting the OBS codes is automatically generated.

The work breakdown tree information generator 135 generates work breakdown tree information. In other words, when a calculation process is performed on WBS codes by calling attribute information of BIM objects, object breakdown tree information reflecting the WBS codes is automatically generated.

The CBS/itemized unit cost caller 136 calls a CBS stored in the CBS DB 123 and an itemized unit cost stored in the itemized unit cost DB 124.

The quantity calculator 137 calculates a quantity of railway facilities according to the object breakdown tree information. In other words, when the quantity calculator 137 is selected, a quantity of BIM-based railway facilities may be calculated from the object breakdown tree information generated by the object breakdown tree information generator 134.

The construction cost calculator 138 calculates a construction cost of railway facilities by combining data of the Public Procurement Service collected according to the work breakdown tree information and the quantity of the railway facilities. In other words, when the construction cost calculator 138 is selected, a construction cost of the BIM-based railway facilities may be calculated by combining data of the Public Procurement Service, for example, construction costs of the BIM object items, and the quantity of the railway facilities on the basis of the work breakdown tree information generated by the work breakdown tree information generator 135.

According to the exemplary embodiment of the present invention, in the case of implementing a BIM design project for railway facilities, BIM object attribute information of railway facilities is automatically mapped to OBS attribute information and WBS attribute information according to a standard classification system, and thus a quantity and construction cost of railway facilities can be automatically calculated. Accordingly, it is possible to reduce errors that may be caused by manual work in 2D computer aided design (CAD)-based design and reduce errors in calculating a quantity, a construction cost, etc. of railway facilities. Consequently, it is possible to increase accuracy in calculating a quantity and construction cost of railway facilities.

### [Method of automatically calculating a quantity and construction cost of BIM-based railway facilities]

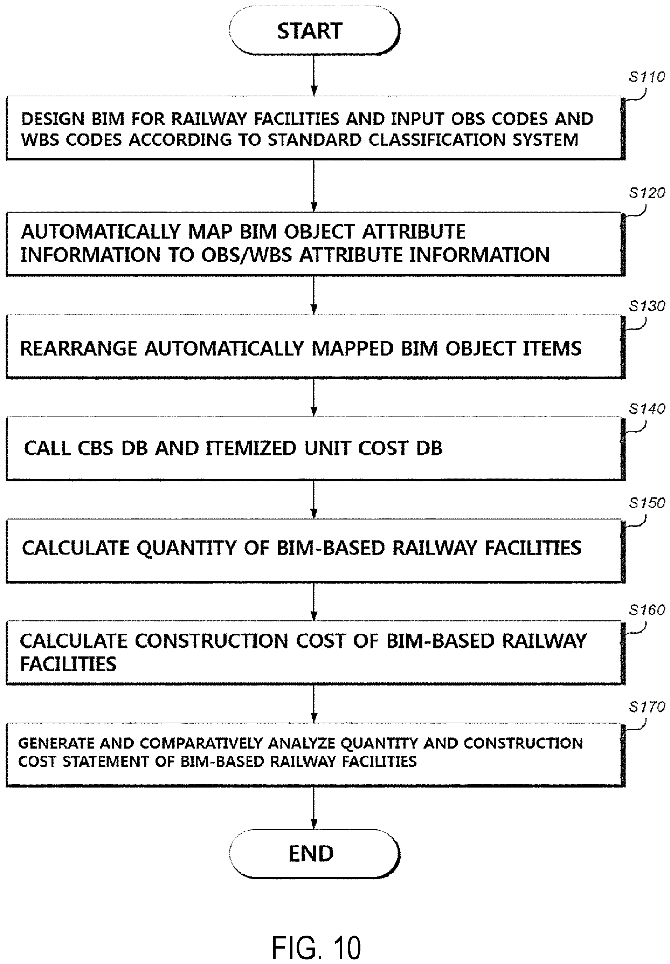

FIG. 10 is a flowchart illustrating a method of automatically calculating a quantity and construction cost of BIM-based railway facilities according to an exemplary embodiment of the present invention.

Referring to FIG. 10, in the method of automatically calculating a quantity and construction cost of BIM-based railway facilities according to the exemplary embodiment of the present invention, BIM for railway facilities is designed first, and OBS codes and WBS codes are input as standard classification codes to generate a BIM design file including BIM object items (S110).

Specifically, a BIM tool is executed to collect data of railway facilities. After that, in the case of a type of construction with a BIM library about railway facilities, BIM is designed on the basis of the library, and in the case of a type of construction without a BIM library, BIM modeling is individually and directly designed to generate BIM objects. Here, the BIM objects include several pieces of attribute information, and the attribute information includes an OBS code and a WBS code.

Subsequently, an OBS code for each of the BIM objects according to an object breakdown table of railway facilities is input to an OBS code input field in the attribute information of the BIM objects, and a WBS code for each of the BIM objects according to a work breakdown table of railway facilities is input to a WBS code input field of the BIM objects. Here, the object breakdown table may be provided by the OBS DB 121 in the standard classification system DB 120, and the work breakdown table may be provided by the WBS DB 122 in the standard classification system DB 120. An OBS code and a WBS code may be input after each breakdown structure is selected according to a level, or may be selected by searching a DB.

Subsequently, a BIM design file is generated to include BIM object items to which OBS codes and WBS codes for a linear shape and structures of railway facilities are input.

Subsequently, the attribute information of the BIM objects is automatically mapped to OBS attribute information/WBS attribute information (S120).

Specifically, the BIM design file is opened to calculate a BIM quantity and construction cost for railway facilities. After that, each of the OBS DB 121 and the WBS DB 122 is called, and BIM object attribute information is called from the BIM design file. When OBS codes and WBS codes are input to the BIM objects, a calculation process is performed on the input OBS codes and WBS codes, and then OBS attribute information and WBS attribute information is automatically mapped to the processed OBS codes and WBS codes to generate object breakdown tree information and work breakdown tree information, respectively.

For example, when OBS codes are input to the attribute information of the BIM objects, the OBS codes and OBS attribute information may be automatically called using the attribute information to automatically generate object breakdown tree information. Also, when WBS codes are input to the attribute information of the BIM objects, the WBS codes and WBS attribute information may be automatically called using the attribute information to automatically generate work breakdown tree information.

Here, when OBS codes and WBS codes which are classification system codes are not input to the attribute information of the BIM objects, corresponding OBS codes/WBS codes and OBS attribute information/WBS attribute information are automatically mapped to the called BIM object attribute information using the drag and drop function.

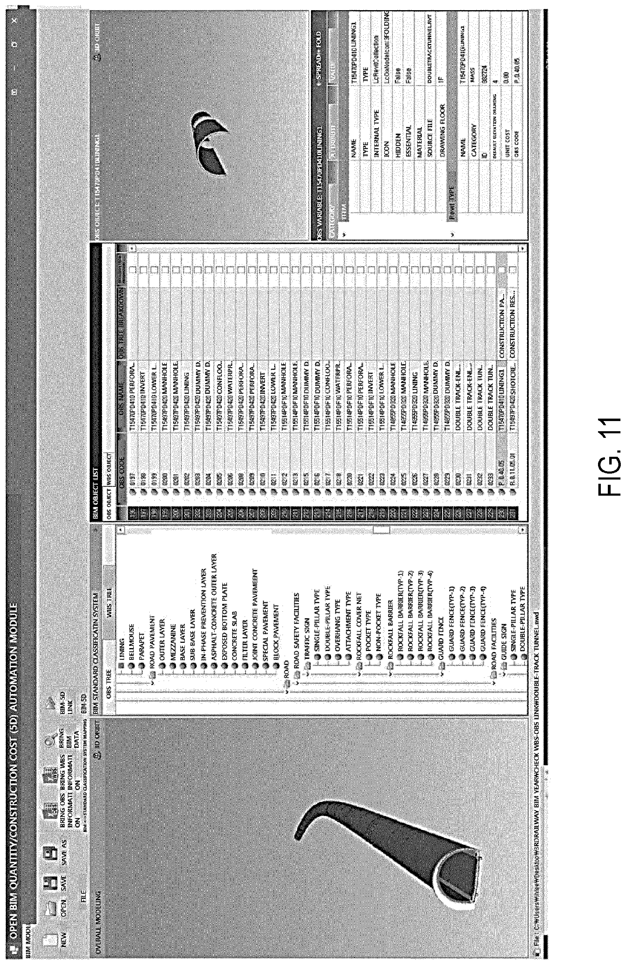

FIG. 11 is a screenshot illustrating automatic mapping between BIM objects and a standard classification system in the method of automatically calculating a quantity and construction cost of BIM-based railway facilities according to the exemplary embodiment of the present invention.

Specifically, as shown in FIG. 11, when OBS codes and WBS codes are not input to the attribute information of the BIM objects, a BIM object to be automatically mapped may be selected from BIM object items, and then an additional automatic mapping operation may be performed between the BIM object and OBS attribute information/WBS attribute information with reference to the object breakdown table and the work breakdown table using the drag and drop function.

Accordingly, when a specific BIM object is selected after the automatic mapping operation is completed, a BIM model is displayed. Also, an OBS code/WBS code may be checked in an attribute variable screen (an attribute information screen of the BIM object), and it may be seen that an OBS code/WBS code and OBS attribute information/WBS attribute information are automatically generated in a BIM object item screen.

Subsequently, OBS codes/WBS codes and BIM object items to which the OBS codes/WBS codes are automatically mapped are called, and BIM object items to which the OBS codes are input and BIM object items to which the WBS codes are input are respectively rearranged in a quantity calculation tab and a construction cost calculation tab to perform calculation.

For example, in the quantity calculation tab, structure information of the OBS may be automatically generated in a tree view, and then an OBS to be examined may be selected. After that, OBS codes of the selected system may be arranged as BIM object items and called and displayed. Also, in the construction cost calculation tab, structure information of the WBS may be automatically generated in a tree view, and then a WBS to be examined may be selected. After that, WBS codes of the selected system may be arranged as BIM object items and called and displayed.

Subsequently, a CBS DB and an itemized unit cost DB are called (S140).

Specifically, the CBS DB 123 is called. When it is necessary to newly generate a statement, the itemized unit cost DB 124 may call a statement reflecting a Public Procurement Service itemized unit cost DB and take real-time standard estimating, price information, and unit wages into consideration. Also, in the case of using an existing statement, a BIM statement which has already been written or an existing 2D statement DB may be called.

Subsequently, a quantity of BIM-based railway facilities is calculated (S150).

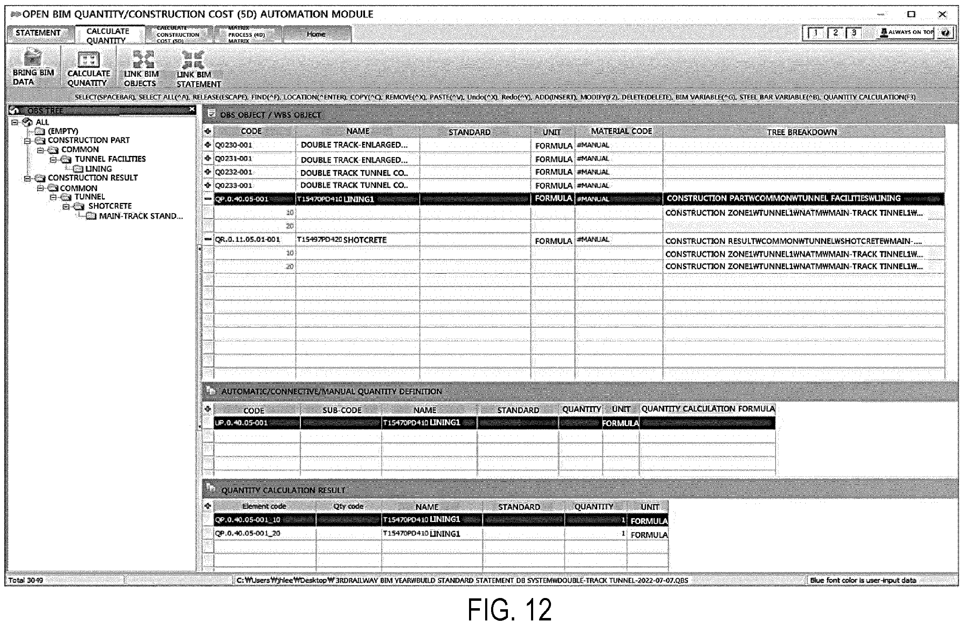

FIG. 12 is a screenshot illustrating calculation of a quantity of BIM objects based on an OBS in the method of automatically calculating a quantity and construction cost of BIM-based railway facilities according to the exemplary embodiment of the present invention.

Specifically, as shown in FIG. 12, a first type of itemized unit cost of each OBS code is calculated, and a calculation process is performed by calling an automatic/connective (formula)/manual quantity calculation formula DB,. In this case, OBS code-specific automatic/connective/manual statement itemized unit cost information is automatically mapped, reflected, and displayed through a quantity calculation tab.

For example, after a specific BIM item and OBS code are clicked among OBS codes and BIM object items in the quantity calculation tab, automatic/connective/manual itemized unit cost statement items for the BIM object item may be checked, and a quantity calculation formula for each BIM object item may be checked and corrected/input. Also, a quantity may be calculated for each OBS code and BIM object item, and automatic/connective/manual quantity calculation results may be checked.

Subsequently, a construction cost of the BIM-based railway facilities is calculated (S 160).

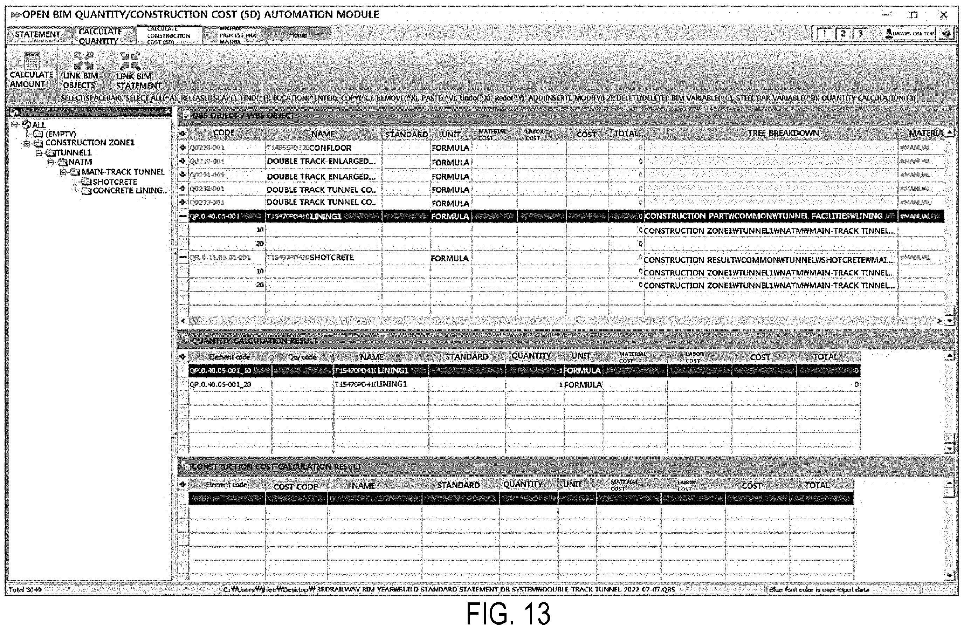

FIG. 13 is a screenshot illustrating calculation of a construction cost of BIM objects based on a WBS in the method of automatically calculating a quantity and construction cost of BIM-based railway facilities according to the exemplary embodiment of the present invention.

Specifically, as shown in FIG. 13, the BIM objects are automatically linked to automatic/connective/manual quantity calculation results through the construction cost calculation tab. For example, when something is in a work process but is not expressed as a BIM object (tunnel measurement service charge, auxiliary construction, etc.), and a quantity and construction cost are additionally input manually. Also, the BIM objects are automatically linked to WBS codes and itemized unit costs of the BIM objects, and a BIM construction cost may be calculated and checked in work breakdown units of a WBS.

Subsequently, a BIM quantity and construction cost statement is generated and comparatively analyzed (S 170).

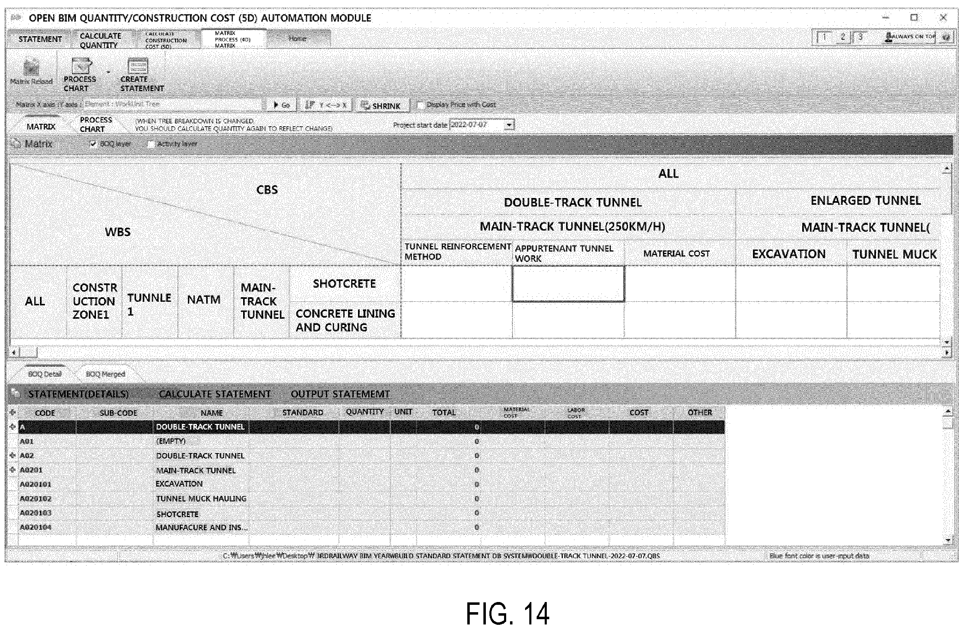

FIG. 14 is a screenshot illustrating generation of a statement of BIM quantity and construction cost in the method of automatically calculating a quantity and construction cost of BIM-based railway facilities according to the exemplary embodiment of the present invention.

Specifically, as shown in FIG. 14, a BIM statement may be generated from a combination of a CBS and a WBS, and an entire BIM quantity and an entire construction cost may be calculated. Also, the quantity/construction cost may be compared with that of an existing statement (a 2D statement or an existing BIM statement), and completion and a progress rate may be managed on the basis of a final BIM statement.

As a result, according to the present invention, in the case of implementing a BIM design project for railway facilities, BIM object attribute information of railway facilities is automatically mapped to OBS attribute information and WBS attribute information according to a standard classification system, and thus a quantity and construction cost of railway facilities can be automatically calculated easily and readily. Accordingly, it is possible to reduce errors that can be caused by manual work in 2D CAD-based design and reduce errors in calculating a quantity, a construction cost, etc. of railway facilities. Consequently, it is possible to increase accuracy in calculating a quantity and construction cost of railway facilities.

In the case of automatically mapping BIM object attribute information of railway facilities to OBS attribute information and WBS attribute information according to a standard classification system, a railway facility without a classification system code is additionally mapped using a drag and drop function. In this way, it is possible to generate object breakdown tree information and work breakdown tree information, and accordingly, a quantity and construction cost of railway facilities can be rapidly and accurately calculated.

In the case of changing the design of railway facilities, it is possible to accurately calculate a quantity and construction cost of railway facilities according to the change in the design of the railway facilities by automatically mapping BIM objects to a standard classification system.

Also, in order to calculate a quantity and construction cost of railway facilities using BIM on items and processes that are not modeled as BIM objects of railway facilities, it is possible to automatically or manually input a quantity and construction cost in connection with OBS code-specific itemized unit costs or manually input a quantity and construction cost to a WBS code.

Further, it is possible to manage completion and a progress rate on the basis of a BIM statement by comparatively examining the BIM statement with an existing statement, and thus a quantity and construction cost of BIM-based railway facilities can be automatically calculated in connection with the existing statement.

The above description of the present invention is exemplary, and those skilled in the technical field to which the present invention pertains should understand that the present invention can be easily modified into other specific forms without changing the technical spirit or essential characteristics thereof. Therefore, the exemplary embodiments described above should be construed as illustrative in all aspects and not restrictive. For example, each component described as a single type may be implemented in a distributed form, and similarly, components described as being in a distributed form may also be implemented in a combined form.

The scope of the present invention is indicated by the following claims, and all altered or modified forms derived from the meaning and scope of the claims and their equivalents should be construed as falling within the scope of the present invention.

## Claims

1. A system for automatically calculating a quantity and construction cost of building information modeling (BIM)-based railway facilities, the system comprising:
a railway facility BIM design module configured to build a BIM library by collecting railway facility data and generate a BIM design file including BIM object items by performing BIM design of railway facilities on the basis of the BIM library;
a standard classification database (DB) configured to store an object breakdown table of an object breakdown structure (OBS), a work breakdown table of a work breakdown structure (WBS), a cost breakdown table of a cost breakdown structure (CBS), and an itemized unit cost calculation formula;
a railway facility quantity and construction cost calculation module configured to generate object breakdown tree information and work breakdown tree information by mapping attribute information of the BIM objects to OBS attribute information/WBS attribute information and perform a calculation process for calculating a quantity and construction cost of BIM-based railway facilities through a quantity calculation tab and a construction cost calculation tab, respectively; and
a BIM quantity and construction cost statement generation module configured to generate a BIM statement based on a combination of the CBS and the WBS and calculate an entire BIM quantity and an entire construction cost.

2. The system of claim 1, wherein, when it is necessary to input OBS codes/WBS codes to the attribute information of the BIM objects, the railway facility quantity and construction cost calculation module additionally and automatically maps individual items of the BIM objects to the OBS attribute information and the WBS attribute information through a drag and drop function with reference to the object breakdown table and the work breakdown table.

3. The system of claim 1, wherein the BIM objects include the attribute information, and
the attribute information of the BIM objects includes at least one of general object information, object identification information, industry foundation classes (IFC) information, object size information, object structure information, and object material information and further includes an OBS code input field and a WBS code input field.

4. The system of claim 1, wherein the standard classification system DB comprises:
an OBS DB configured to store a hierarchical structure of space, facility, and part units for efficiently managing BIM objects of railway facilities from an object viewpoint;
a WBS DB configured to store a hierarchical structure obtained by subdividing work performed by a specific construction project team to achieve a goal and produce a necessary result;
a CBS DB configured to store a hierarchical structure of a WBS including all work and services performed by a project operator from a cost perspective; and
an itemized unit cost DB configured to store itemized unit costs for OBS codes input to unit BIM objects of the OBS and store automatic/connective/manual calculation formulae for BIM objects to examine an item not modeled through BIM.

5. The system of claim 1, wherein the railway facility BIM design module comprises:
a BIM library generator configured to collect railway facility data using a BIM tool and generate a BIM library model for railway facilities;
a classification system code input part including an OBS code input part configured to input an OBS code to an OBS code input field of BIM objects of railway facilities and a WBS code input part configured to input a WBS code to a WBS code input field of BIM objects of railway facilities; and
a BIM design modeling performer configured to generate the BIM design file including the BIM object items by performing BIM for BIM design of the railway facilities on the basis of the BIM library.

6. The system of claim 5, wherein the railway facility quantity and construction cost calculation module comprises:
a classification system code checker configured to determine whether it is necessary to additionally input an OBS code and a WBS code which are classification system codes to BIM object attribute information of each of the BIM object items;
an automatic mapping and calculation processor configured to map the OBS attribute information and the WBS attribute information to the BIM object attribute information and perform the calculation process;
a drag and drop executer configured to additionally map OBS attribute information and WBS attribute information of each BIM object item with reference to the object breakdown table and the work breakdown table when it is necessary to input the OBS code and the WBS code;
an object breakdown tree information generator configured to call the attribute information of the BIM objects, perform a calculation process on OBS codes and the OBS attribute information, and automatically generate object breakdown tree information reflecting the OBS codes;
a work breakdown tree information generator configured to call the attribute information of the BIM objects, perform a calculation process on WBS codes and the WBS attribute information, and automatically generate work breakdown tree information reflecting the WBS codes and the WBS attribute information;
a CBS/itemized unit cost caller configured to call a CBS stored in the CBS DB and an itemized unit cost stored in the itemized unit cost DB;
a quantity calculator configured to calculate a quantity of BIM-based railway facilities from the object breakdown tree information generated by the object breakdown tree information generator; and
a construction cost calculator configured to calculate a construction cost of the BIM-based railway facilities by combining construction costs of the BIM object items which are data of the Public Procurement Service and the quantity of the railway facilities on the basis of the work breakdown tree information generated by the work breakdown tree information generator.

7. The system of claim 6, wherein, when it is necessary to input the classification system codes, the drag and drop executer additionally maps OBS attribute information and WBS attribute information of each BIM object item with reference to the object breakdown table and the work breakdown table using a drag and drop function.

8. The system of claim 1, wherein the BIM quantity and construction cost statement generation module compares a quantity/construction cost with an existing statement and manages completion and a progress rate on the basis of a final BIM statement.

9. A method of automatically calculating a quantity and construction cost of building information modeling (BIM)-based railway facilities, the method comprising:
a) designing BIM for railway facilities and inputting object breakdown structure (OBS) codes and work breakdown structure (WBS) codes as standard classification codes to generate BIM object items which are a BIM design file;
b) automatically mapping BIM object attribute information to OBS/WBS attribute information provided by a standard classification system database (DB);
c) rearranging automatically mapped BIM object items;
d) calling a cost breakdown structure (CBS) DB and an itemized unit cost DB;
e) calculating a quantity of BIM-based railway facilities;
f) calculating a construction cost of the BIM-based railway facilities; and
g) generating and comparatively analyzing a quantity and construction cost statement of the BIM-based railway facilities.

10. The method of claim 9, wherein operation c) comprises, when it is necessary to input the classification system codes, additionally mapping the BIM object attribute information to OBS attribute information/WBS attribute information with reference to an object breakdown table and a work breakdown table using a drag and drop function.

11. The method of claim 9, wherein the BIM objects include the attribute information, and
the attribute information of the BIM objects includes at least one of general object information, object identification information, industry foundation classes (IFC) information, object size information, object structure information, and object material information and further includes an OBS code input field and a WBS code input field.

12. The method of claim 9, wherein the standard classification system DB of operation b) comprises:
an OBS DB configured to store a hierarchical structure of space, facility, and part units for efficiently managing BIM objects of railway facilities from an object viewpoint;
a WBS DB configured to store a hierarchical structure obtained by subdividing work performed by a specific construction project team to achieve a goal and produce a necessary result;
a CBS DB configured to store a hierarchical structure of a WBS including all work and services performed by a project operator from a cost perspective; and
an itemized unit cost DB configured to store itemized unit costs for OBS codes input to unit BIM objects of the OBS and store automatic/connective/manual calculation formulae for BIM objects to examine an item not modeled through BIM.

13. The method of claim 12, wherein operation d) comprises, when it is necessary to newly generate a statement, calling, by the itemized unit cost DB, a statement reflecting a Public Procurement Service standard itemized unit cost DB in consideration of real-time standard estimating, price information, and unit wages.

14. The method of claim 12, wherein operation e) comprises calculating a first type of itemized unit cost of each OBS code, calling an automatic/connective (formula)/manual quantity calculation formula DB, performing a calculation process, and automatically mapping, reflecting, and displaying OBS code-specific automatic/connective/manual statement itemized unit cost information through a quantity calculation tab.

15. The method of claim 9, wherein operation f) comprises automatically linking the BIM objects to automatic/connective/manual quantity calculation results through a construction cost calculation tab, additionally inputting a quantity and construction cost manually when something is in a work process but is not expressed as a BIM object, automatically linking the BIM objects to the WBS codes and itemized unit costs of the BIM objects, and calculating and checking a BIM construction cost in work breakdown units of a WBS.

16. The method of claim 9, wherein operation g) comprises comparing a quantity/construction cost with an existing statement and managing completion and a progress rate on the basis of a final BIM statement.
